# EUROPÄISCHE PATENTSCHRIFT

(11) **EP 2 254 776 B1**
(45) Veröffentlichungstag und Bekanntmachung des Hinweises auf die Patenterteilung: **08.02.2012**
(21) Anmeldenummer: 09719608.3
(22) Anmeldetag: 05.03.2009
(51) Int. Cl.: B60R 25/02

(54) **VERFAHREN SOWIE VORRICHTUNG ZUR ANSTEUERUNG EINES SPERRGLIEDES**
METHOD AND DEVICE FOR CONTROLLING A BLOCKING MEMBER
PROCÉDÉ ET DISPOSITIF DE COMMANDE D UN ORGANE DE BLOCAGE

(30) Priorität: 10.03.2008 DE 102008013487
(43) Veröffentlichungstag der Anmeldung: 01.12.2010
(73) Patentinhaber: Huf Hülsbeck & Fürst GmbH & Co. KG, 42551 Velbert (DE)
(72) Erfinder: MÖNIG, Stefan, 58332 Schwelm (DE); WITTWER, Dirk, 42579 Heiligenhaus (DE); GEURDEN, Armin, 47929 Grefrath (DE); SIMON, Jörg, 42489 Wülfrath (DE); SCHINDLER, Mirko, 42549 Velbert (DE); KLEIN, Matthias Dr., 85221 Dachau (DE); SCHNEIDER, Joachim, 42549 Velbert (DE)
(74) Vertreter: Vogel, Andreas
(86) Internationale Anmeldenummer: PCT/EP2009/052628
(87) Internationale Veröffentlichungsnummer: WO 2009/112429

(56) Entgegenhaltungen:
- DE-A1- 19 929 435
- DE-C1- 19 809 295
- US-A1- 2006 144 184

## Beschreibung

Die Erfindung betrifft ein Verfahren zur Ansteuerung eines Sperrgliedes eines funktionswesentlichen Bauteils, insbesondere einer Lenksäule eines Kraftfahrzeuges, insbesondere eines Motorrads, mit einem Antrieb, mit dem das Sperrglied in eine Verriegelungsstellung und in eine Entriegelungsstellung und umgekehrt bewegbar ist, wobei in der Verriegelungsstellung das Sperrglied in das funktionswesentliche Bauteil mechanisch eingreift, in der Entriegelungsstellung das Sperrglied losgelöst vom funktionswesentlichen Bauteil ist, über eine definierte Auslöseaktion des Benutzers der Verriegelungsvorgang gestartet wird, bei dem das Sperrglied aus der Entriegelungsstellung in die Verriegelungsstellung bewegt wird.

Im Stand der Technik sind Vorrichtungen zur Ansteuerung eines Sperrgliedes, insbesondere einer Lenksäule eines Kraftfahrzeuges bekannt, wobei ein Sperrglied vorgesehen ist, das über einen Antrieb in eine Verriegelungsstellung und in eine Entriegelungsstellung und umgekehrt bewegt werden kann. Derartige Vorrichtungen werden beispielsweise im Rahmen von elektromechanischen Lenkradschlössern eingesetzt, wobei das Sperrglied in der Entriegelungsstellung sich weitestgehend innerhalb der Vorrichtung befindet und nicht in die Lenksäule eingreift. Im Gegensatz dazu ragt das Sperrglied in der Verriegelungsstellung aus der Vorrichtung heraus und ist in einer Wirkverbindung mit der Lenksäule, die somit arretierend in ihrer Position gehalten ist. Es hat sich nachteiliger Weise gezeigt, dass beispielsweise eine Fehlstellung der Lenksäule eintreten kann, bei der das Sperrglied nicht wunschgemäß die Lenksäule arretiert, da beispielsweise beim Austritt aus der Vorrichtung das Sperrglied auf einen Zahn der Lenksäule trifft. Befindet sich das Lenkradschloss des Motorrads in einem derartigen Zustand, in der das Sperrglied zwar seine Entriegelungsstellung verlassen hat, jedoch die Verriegelungsstellung aufgrund einer Fehlstellung der Lenksäule nicht erreicht hat, kann der Benutzer noch das Motorrad bewegen, wobei nachteiliger Weise über die Bewegung des Motorrads das Sperrglied in die Lenksäule nachträglich einrasten kann. Dieses ungewollte, spätere Einrasten des Sperrgliedes kann einen Sturz des Benutzers samt des Motorrades nach sich ziehen. Ein gattungsbildendes Verfahren bzw. eine solche Vorrichtung ist aus der DE 198 09 295 C1 bekannt.

Es ist Aufgabe der vorliegenden Erfindung, ein Verfahren sowie eine Vorrichtung zur Ansteuerung eines Sperrgliedes der genannten Art zu schaffen, bei der die genannten Nachteile vermieden werden, insbesondere ein Verfahren sowie eine Vorrichtung bereitgestellt wird, wodurch die Sicherheit für den Benutzer verbessert wird.

Zur Lösung dieser Aufgabe wird ein Verfahren mit den Merkmalen des Anspruches 1 vorgeschlagen. In den abhängigen Ansprüchen sind bevorzugte Alternativen ausgeführt.

Dazu ist erfindungsgemäß vorgesehen, dass eine Überwachung durch eine Kontrolleinheit erfolgt, mit der eine mögliche Fehlstellung des Bauteils, bei der eine Verriegelungsstellung des Sperrgliedes ausgeschlossen ist, feststellbar ist, so dass das Sperrglied trotz der Auslöseaktion anschließend die ursprüngliche Entriegelungsstellung einnimmt. Bei dem Bauteil kann es sich um ein Element eines Kraftfahrzeuges, Motorrads oder eines Quads handeln. Die Erfindung verhindert, dass auf Dauer mehr als zwei Stellungen des Sperrgliedes auftreten. Wird über die Auslöseaktion der Verriegelungsvorgang gestartet, kann es in einigen Fällen vorkommen, dass das Bauteil nicht die exakte Position für eine Verriegelungsstellung des Sperrgliedes einnimmt. In diesem Fall entsteht kein mechanischer Eingriff des Sperrgliedes mit dem funktionswesentlichen Bauteil. Das Bauteil kann beispielsweise als eine Lenksäule ausgeführt werden, die Ausnehmungen aufweist, in die das Sperrglied in seiner Verriegelungsstellung eingreift. In einer möglichen Fehlstellung der Lenksäule tritt das Sperrglied nach der Auslöseaktion nicht in die genannte Ausnehmung, sondern kontaktiert beispielsweise den benachbarten Bereich (Zahn etc.) der Ausnehmung. Dieser ungewollte Schwebezustand des Sperrgliedes wird über die Kontrolleinheit erkannt, wodurch das Sperrglied erneut zur Bewegung in seine ursprüngliche Entriegelungsstellung angesteuert wird. Ein ungewolltes und unbewusstes Verriegeln aus einer Zwischenstellung des Sperrgliedes kann somit wirkungsvoll verhindert werden. Eine Fehlstellung der Lenksäule kann beispielsweise dadurch entstehen, dass sich der Lenker des Motorrades nicht in seiner entsprechenden Position befindet. Die bewusste Handlung zur Auslösung des Verriegelungsvorganges kann zum Beispiel durch einen Knopfdruck, ein Abziehen eines Schlüssels aus der elektromechanischen Lenkungsverriegelung stattfinden.

Eine mögliche Fehlstellung des Bauteils ist beispielsweise unmittelbar über die Stellung des Sperrgliedes überprüfbar. Die Kontrolleinheit kann beim Verriegelungsvorgang überprüfen, inwieweit das Sperrglied eine definierte Ausfahrposition, in der die Verriegelungsstellung erreicht ist, einnimmt. Ist die Verriegelungsstellung des Sperrgliedes erreicht, kann daraus geschlossen werden, dass keine Fehlstellung des Bauteils vorliegt.

Alternativ ist es selbstverständlich denkbar, unmittelbar über die Kontrolleinheit die Position des Bauteils, insbesondere der Lenksäule zu ermitteln. Ebenfalls bietet sich die Möglichkeit, dass beim Verriegelungsvorgang die Kontrolleinheit eine Zustandsgröße des Antriebes erfasst oder ermittelt, aus der eine mögliche Fehlstellung des Bauteils feststellbar ist. Weist zum Beispiel der Antrieb einen Elektromotor und ein Getriebe auf, das in mechanischer Wirkverbindung mit dem Sperrglied ist, kann über die Position eines der Getriebeelemente, insbesondere des Antriebsrades oder Abtriebsrades, die als Zustandsgröße dient, auf eine mögliche Fehlstellung des funktionswesentlichen Bauteils geschlossen werden.

In einer möglichen Ausführungsform der Erfindung wird die Kontrolleinheit über die Auslöseaktion angesteuert und aktiviert. Das bedeutet, dass erst nach der bewussten Handlung des Benutzers zur Verriegelung des Kraftfahrzeuges die Stellung des funktionswesentlichen Bauteils überprüft wird. Alternativ und/oder zusätzlich ist es selbstverständlich in einer weiteren Ausführungsform der Erfindung denkbar, dass eine permanente Überwachung einer möglichen Fehlstellung des Bauteils durchgeführt wird.

Das erfindungsgemäße Verfahren umfasst die Möglichkeit, dass nach einer Erkennung einer Fehlstellung des Bauteils das Sperrglied aus einer Zwischenstellung, die zwischen der Entriegelungsstellung und der Verriegelungsstellung liegt, in die Entriegelungsstellung zurück verfahren wird. Bei dieser Ausführungsform folgt parallel nach der Auslöseaktion des Benutzers eine entsprechende Bewegung des Sperrgliedes aus der Entriegelungsstellung in die Verriegelungsstellung sowie eine entsprechende Überwachung durch die Kontrolleinheit, inwieweit eine Fehlstellung des Bauteils vorliegt oder nicht. Liegt unglücklicherweise eine Fehlstellung vor, erfolgt hieraus eine Zurückbewegung des Sperrgliedes aus einer Zwischenstellung in die Entriegelungsstellung. In einer möglichen Ausführungsvariante kann vorgesehen sein, dass nach einer Erkennung einer Fehlstellung des Bauteils das Sperrglied trotz einer Auslöseaktion des Benutzers in seiner Entriegelungsstellung unbeweglich verbleibt. In diesem Fall wird über die unmittelbare Positionsbestimmung des funktionswesentlichen Bauteils eine mögliche Fehlstellung ermittelt. Erst wenn eine positive Rückmeldung vorliegt, dass das funktionswesentliche Bauteil die korrekte Lage für eine Verriegelungsstellung des Sperrgliedes aufweist, erfolgt eine Ansteuerung zur Bewegung des Sperrgliedes aus seiner Entriegelungsstellung in die Verriegelungsstellung. Liegt keine positive Rückmeldung vor, verbleibt das Sperrglied unbeweglich in seiner Entriegelungsstellung.

Vorteilhafterweise weist die Kontrolleinheit ein Sensorelement auf, das insbesondere über eine definierte Änderung seiner elektrischen Eigenschaft ein Sensorsignal erzeugt, aus dem eine mögliche Fehlstellung des Bauteils festgestellt werden kann. Es sind zu diesem Zweck unterschiedliche Sensoren einsetzbar, insbesondere analoge, binäre oder digitale Sensoren. In einer vorteilhaften Ausführungsvariante wird über eine Änderung der Induktivität, des Widerstandes oder der Kapazität das genannte Sensorsignal erzeugt. Beispielsweise kann das Sensorelement als ein Magnetfeldsensor, ein Drucksensor oder als ein optischer Sensor ausgeführt sein.

Des Weiteren wird die genannte Aufgabe durch eine Vorrichtung mit den Merkmalen des Anspruches 11 gelöst. In den abhängigen Ansprüchen 12 bis 17 sind vorteilhafte Ausführungsformen beschrieben.

Vorzugsweise ist ein Gehäuse vorgesehen, innerhalb dessen der Antrieb, das Sperrglied sowie die Kontrolleinheit angeordnet sind. Alternativ kann die Kontrolleinheit auch außerhalb des Gehäuses angeordnet sein, insbesondere in der Nähe des funktionswesentlichen Bauteils, um dessen Position zu überwachen. Das funktionswesentliche Bauteil ist mit einem Lenkerelement verbunden, das vorteilhafterweise in eine linke und eine rechte Anschlagposition durch den Benutzer bewegbar ist, wobei lediglich in den genannten Anschlagpositionen eine Verriegelungsstellung des Sperrgliedes erreichbar ist. Befindet sich das Lenkerelement nicht in einer der genannten Anschlagpositionen, liegt erfindungsgemäß eine Fehlstellung des funktionswesentlichen Bauteils vor. Über die definierte Auslöseaktion erreicht das Sperrglied nicht die Verriegelungsstellung, da die Kontrolleinheit diese Fehlstellung erkennt. Vorteilhafterweise weist das funktionswesentliche Bauteil, insbesondere die Lenksäule des Motorrads oder des Quads lediglich zwei Aufnahmen auf, in die das Sperrglied in seiner Verriegelungsstellung arretierend eingreifen kann.

Die erfindungsgemäße Vorrichtung kann als elektrische/elektromechanische Lenkungsverriegelung zum Einsatz kommen, wobei die Vorrichtung zudem problemlos mit insbesondere so genannten "Keyless-Entry-Systemen" kombinierbar ist. Die erfindungsgemäße Vorrichtung kann beispielsweise per Funksignal oder nach einem stattgefundenen Datenaustausch, aktiviert werden. Dabei ermöglicht die Erfindung selbstverständlich eine Rückmeldung dahingehend, ob die betreffende Vorrichtung zuverlässig das funktionswesentliche Bauteil, insbesondere die Lenksäule blockiert oder nicht. Dies kann zum Beispiel durch eine optische oder akustische Meldevorrichtung am Kraftfahrzeug dargestellt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: die erfindungsgemäße Vorrichtung zur Ansteuerung eines Sperrgliedes in rein schematischer Darstellung,
- Figur 2: eine mögliche Ausführungsform der Kontrolleinheit zur Überwachung einer möglichen Fehlstellung der Lenksäule,
- Figur 3: eine weitere Ausführungsform der Kontrolleinheit, die als optischer Sensor ausgeführt ist,
- Figur 4: eine weitere Alternative der Kontrolleinheit, die an einem zweiteiligen Sperrglied angeordnet ist,
- Figur 5a: eine weitere Möglichkeit einer Ausgestaltung der Kontrolleinheit,
- Figur 5b: eine noch weitere Ausführungsalternative der Kontrolleinheit am Sperrglied und
- Figur 6: eine schematische Darstellung des erfindungsgemäßen Verfahrens zur Ansteuerung des Sperrgliedes.

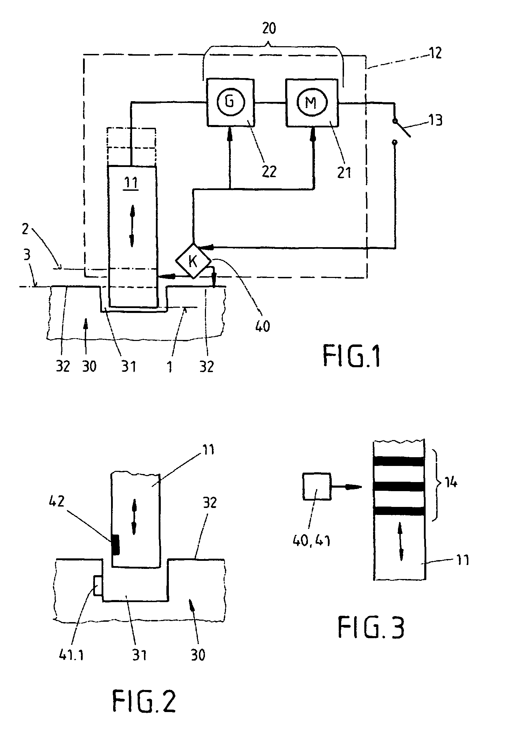

Figur 1 zeigt rein schematisch eine mögliche Ausführungsform einer Vorrichtung 10 zur Ansteuerung eines Sperrgliedes 11 eines funktionswesentlichen Bauteils 30. Bei dem Bauteil 30 handelt es sich um eine Lenksäule 30 eines Motorrads. Die Vorrichtung weist einen Antrieb 20 mit einem Getriebe 22 und einem Elektromotor 21 auf. Das Getriebe 22 steht in mechanischer Kopplung mit dem Sperrglied 11, wobei das Sperrglied 11 in Figur 1 sich in einer Verriegelungsstellung 1 befindet. Über das Getriebe 22 ist das Sperrglied 11 aus der Verriegelungsstellung 1 translatorisch nach oben in eine Entriegelungsstellung 2 bewegbar, die strichpunktartig in Figur 1 angedeutet ist. In der Verriegelungsstellung 1 ragt das Sperrglied 11 mit seinem freien Ende in eine Nut 31 der Lenksäule 30 ein, wodurch die Lenksäule 30 gesperrt ist. Im Gegensatz dazu ist das Sperrglied 11 in der Entriegelungsstellung 2 losgelöst von der Lenksäule 30.

Im vorliegenden Ausführungsbeispiel besteht das Sperrglied 11 aus einem Metall, insbesondere aus Stahl. Die Materialdicke ist dabei so bemessen, dass weitestgehend eine Materialzerstörung ausgeschlossen werden kann. In einer alternativen Ausführungsform kann das Sperrglied 11 in Spritzgusstechnik hergestellt sein. Im vorliegenden Ausführungsbeispiel ist das freie Ende des Sperrgliedes 11 in seiner Kontur abgerundet, wodurch ein Einrasten des Sperrgliedes 11 in die Nut 31 der Lenksäule 30 erleichtert wird. In einer weiteren nicht dargestellten Ausführungsform kann das freie Ende des Sperrgliedes auch angeschrägt ausgeführt sein.

Das Getriebe 22 kann beispielsweise mehrstufig ausgeführt sein, welches nicht explizit dargestellt ist. Hierbei kann das Getriebe 22 ein Antriebsrad aufweisen, das unmittelbar auf das Sperrglied 11 wirkt. Das Antriebsrad kann beispielsweise über eine Schneckenwelle, die über den elektrischen Motor 21 angetrieben wird, angetrieben werden.

Des Weiteren weist die Vorrichtung 10 ein Gehäuse 12 auf, innerhalb dessen der Antrieb 20, das Sperrglied 11 sowie eine Kontrolleinheit 40 angeordnet sind. Die Kontrolleinheit 40 dient hierbei zur Überwachung der Position der Lenksäule 30. Die Verriegelungsstellung 1 des Sperrgliedes 11 kann nämlich nur dann realisiert werden, wenn die Lenksäule 30 mit ihrer Nut 31 die korrekte Position bezogen zum Sperrglied 11 einnimmt. Weist nämlich die Nut 31 nicht ihre entsprechende Position auf, die für die Verriegelungsstellung 1 des Sperrgliedes 11 erforderlich ist, verfährt das Sperrglied 11 nach einer definierten Auslöseaktion des Benutzers aus der Entriegelungsposition 2, in der das Sperrglied 11 losgelöst zur Lenksäule 30 ist, gegen den Zahn 32 oder Flanke der Lenksäule 30. Hier nimmt das Sperrglied 11 eine Zwischenstellung 3 ein, die zwischen der Entriegelungsstellung 2 und der Verriegelungsstellung 1 liegt. Über die Fehlstellung der Lenksäule 30, die durch die Kontrolleinheit 40 erkannt wird, erfolgt eine Zurückbewegung des Sperrgliedes 11 aus der Zwischenstellung 3 in die Entriegelungsstellung 2.

Die Auslöseaktion wird über einen Schalter 13 bewusst vom Benutzer bewirkt. Hierdurch wird über den Antrieb 20 das Sperrglied 11 aus seiner Entriegelungsstellung 2 in die Verriegelungsstellung 1 translatorisch bewegt. Die Kontrolleinheit 40 kann auf diversen Wegen eine mögliche Fehlstellung der Lenksäule 30 feststellen, welches schematisch in Figur 1 angedeutet ist. Beispielsweise kann die Kontrolleinheit 40 über die Ausfahrposition des Sperrgliedes 11 während des Verriegelungsvorganges überprüfen, ob eine Verriegelungsstellung 1 erreicht ist. Falls das Sperrglied 11 aus der Entriegelungsstellung 2 sich entfernt hat, aber die Verriegelungsstellung 1 nicht erreicht hat, sondern sich beispielsweise in der Zwischenstellung 3 befindet, kann daraus geschlossen werden, dass eine Fehlstellung der Lenksäule 30 vorliegt.

In einer alternativen Ausführungsform kann die Kontrolleinheit 40 auch unmittelbar die Position der Lenksäule 30 ermitteln, um somit eine mögliche Fehlstellung zu detektieren. Ebenfalls ist es denkbar, dass über ermittelte Zustandsgrößen des Antriebes 20 auf eine mögliche Fehlstellung der Lenksäule 30 geschlossen werden kann, welches ebenfalls in Figur 1 angedeutet ist. Beispielsweise kann der Strom des Elektromotors 21 als Zustandsgröße dienen, der durch die Kontrolleinheit 40 ermittelt wird. In einer möglichen Ausgestaltung der erfindungsgemäßen Vorrichtung kann über einen erhöhten Strom im Elektromotor 21 darauf geschlossen werden, dass das Sperrglied 11 sich in einer Zwischenstellung 3 anliegend auf dem Zahn 32 der Lenksäule 30 befindet.

Die Kontrolleinheit 40 kann mit einem Sensorelement 41 ausgeführt sein. Gemäß Figur 2 ist das Sensorelement als ein Hallsensor 41.1 ausgebildet, der unmittelbar an der Lenksäule 30 im Bereich der Nut 31 angeordnet ist. Das Sperrglied 11 weist an seinem freien Ende einen Dauermagneten 42 auf. Wenn das Sperrglied 11 sich in der Verriegelungsstellung 1, also innerhalb der Nut 31 befindet, wird durch den Hallsensor 41.1 die Position des Permanentmagneten 42 innerhalb der Nut 31 erfasst. In einer weiteren nicht dargestellten Alternative können der Hallsensor sowie der Permanentmagnet an anderen Stellen, insbesondere am Gehäuse der erfindungsgemäßen Vorrichtung angeordnet sein, um die jeweilige Stellung des Sperrgliedes 11 zu bestimmen. Im Bereich der Magnetfeldsensoren sind ebenfalls Reedschalter, Magnetresonanzsensoren oder dergleichen einsetzbar, die berührungslos und damit auch verschleißfrei arbeiten.

In Figur 3 ist eine weitere Ausführungsalternative der Kontrolleinheit 40 dargestellt, die als optischer Sensor 40 ausgeführt ist. Am Sperrglied 11 sind Positionsmarkierungen 14 angeordnet, die mittels des optischen Sensors 40 berührungslos erfasst werden. Hierdurch kann eine Erfassung der jeweiligen Stellung 1, 2 des Sperrgliedes 11 erfolgen. Im vorliegenden Ausführungsbeispiel sind eine Folge von Positionsmarkierungen vorgesehen, die aus einer Vielzahl von in Längsrichtung des Sperrgliedes 11 hintereinander angeordneten alternierenden Streifen bestehen. In diesem Positionsmuster 14 ist die jeweilige Position des Sperrgliedes 11 kodiert, so dass durch Abtastung der Positionsmarkierung 14 mittels des optischen Sensors 40 die aktuelle Position des Sperrgliedes 11 bestimmbar ist. Im vorliegenden Fall ist der Sensor 40 als Reflexionssensor ausgebildet, der einen Sendelichtstrahlen emittierenden Sender, einen Empfangslichtstrahlen empfangenden Empfänger sowie eine nicht dargestellte Auswerteeinheit aufweist. Hierbei ist der Sender vorzugsweise von einer Leuchtdiode und der Empfänger von einer Fotodiode gebildet. Die Auswerteeinheit besteht aus einem Mikroprozessor oder dergleichen. Der Reflexionssensor ist vorzugsweise in einem Gehäuse mit geringer Baugröße integriert. Zur Herstellung der dunklen Positionsmarkierung 14 können zum Beispiel an den hierfür vorgesehenen Positionen Ausnehmungen im Sperrglied 11 erzeugt werden, die an deren Oberfläche ausmünden. Diese Ausnehmungen weisen eine geringe Tiefe auf und werden durch geeignete, materialabtragende Verfahren, wie zum Beispiel erodieren erzeugt. In diesen Ausnehmungen werden dunkle Materialschichten eingebracht, die die dunklen Positionsmarkierungen 14 bilden, welches beispielsweise durch ein Eloxieren erfolgen kann. Die dunklen Materialschichten der Positionsmarkierungen 14 reflektieren im Vergleich zur Oberfläche des Sperrgliedes 11 nur einen geringeren Anteil der Sendelichtstrahlen. Der Lichtsensor 40 kann beispielsweise am Gehäuse 12 der erfindungsgemäßen Vorrichtung 10 angeordnet sein. Alternativ ist es ebenfalls denkbar, dass der Lichtsensor 40 an der Lenksäule 30 befestigt ist und dem Sperrglied 11 zugewandt ist.

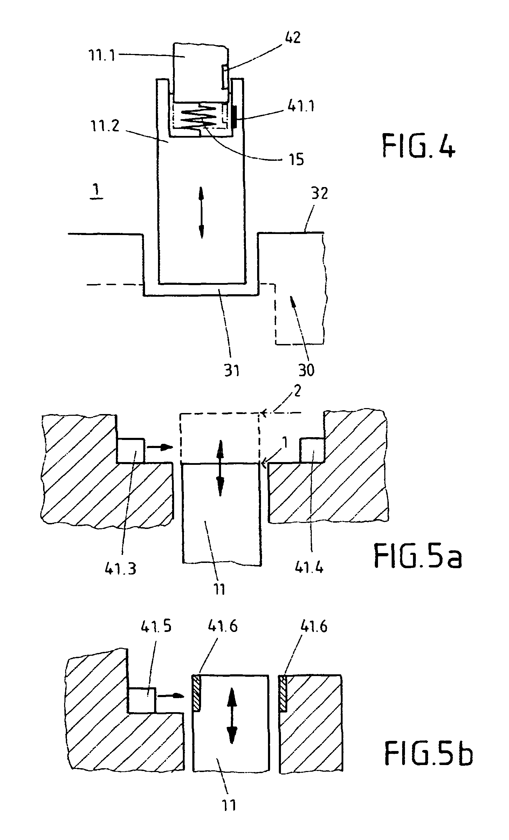

In einer weiteren Ausführungsalternative ist es denkbar, dass das Sperrglied 11 zweiteilig ausgeführt ist. Hierbei besteht das Sperrglied 11 unter anderem aus einem Basisteil 11.1 und einem Wirkteil 11.2, die miteinander über ein Federelement 15 verbunden sind. Figur 4 stellt den Normalfall dar, bei dem das Sperrglied 11 funktionsgerecht in Verriegelungsstellung 1 verfährt. Hierbei befindet sich das Wirkteil 11.2 mit seinem freien Ende innerhalb der Nut 31 der Lenksäule 30. Falls eine Fehlstellung der Lenksäule 30 vorliegt, trifft das Wirkteil 11.2 mit seinem freien Ende auf den Zahn 32, wobei über den Antrieb 20 das Basisteil 11.1 weiter in Richtung des Wirkteils 11.2 bewegt wird und die Position einnimmt, die in gestrichelter Darstellung gemäß Figur 4 angedeutet ist. Hierbei wird das Federelement 15 stärker zusammen gedrückt. Die Kontrolleinheit 40 ist bei dieser Ausführungsform gemäß Figur 4 -wie in Figur 2- als Magnetfeldsensor ausgeführt, mit einem Hallsensor 41.1 und einem Permanentmagneten 42. Hierbei befindet sich der Permanentmagnet 42 am Basisteil 11.1 und der Hallsensor 41.1 am Wirkteil 11.2. Trifft das Sperrglied 11 bei einer Fehlstellung der Lenksäule 30 auf den Zahn 32, stehen sich der Hallsensor 41.1 wie der Permanentmagnet 42 nahezu gegenüber, wodurch ein Signal ausgelöst wird, mittels dessen feststellbar ist, dass eine Verriegelungsstellung 1 des Sperrgliedes 11 nicht durchführbar ist.

In Figur 5a und Figur 5b ist die Kontrolleinheit 40 mit einem optischen Sensor ausgeführt. Figur 5a zeigt eine Kontrolleinheit, die als eine Einweg-Lichtschranke arbeitet, die aus einem räumlich getrennten Sender- und Empfängerelement 41.3, 41.4 besteht. Erfasst wird hierbei die Unterbrechung des Lichtstrahls zwischen Sender 41.3 und Empfänger 41.4. Hierbei kann das Sensorfeld mit sichtbarem Licht oder mit Infrarot betrieben werden.

In Figur 5b ist die Kontrolleinheit 40 als Reflexions-Lichtschranke, die aus einem Sender- und Empfängerelement 41.5 besteht, die beide in einem gemeinsamen Gehäuse untergebracht sind. Die von dem Sender- und Empfängerelement 41.5 ausgesendete gepulste Licht- oder Infrarotstrahlung wird bei Annäherung des Sperrgliedes 11 am Reflektor 41.6, der ebenfalls am Sperrglied 11 angeordnet ist, reflektiert und über das Empfängerelement 41.5 empfangen. Der Reflektor 41.6 kann alternativ innerhalb der Nut 31 der Lenksäule 30 angeordnet sein, welches ebenfalls in Figur 5b angeordnet ist. Hierbei befindet sich das Sperrglied 11 linear beweglich gelagert zwischen dem Reflektor 41.6 und dem Sender- und Empfängerelement 41.5.

In einer weiteren nicht dargestellten Alternative der Erfindung kann die Kontrolleinheit 40 ein Sensorelement aufweisen, das als Drucksensor arbeitet. Hierbei können Dehnungsmessstreifen zum Einsatz kommen, die beispielsweise am freien Ende des Sperrgliedes 11 befestigt sind und Kräfte, Drehmomente, Druck, Dehnungen oder Stauchungen des Sperrgliedes 11 detektieren können. Die unterschiedlichen Ausführungsalternativen von Sensorelementen können selbstverständlich am Antrieb 20, insbesondere am Getriebe 22, Motor 21 und/oder am Gehäuse 12 vorgesehen sein, um Zustandsgrößen zu ermitteln, aus denen mittelbar oder unmittelbar auf eine Fehlstellung der Lenksäule 30 geschlossen werden kann.

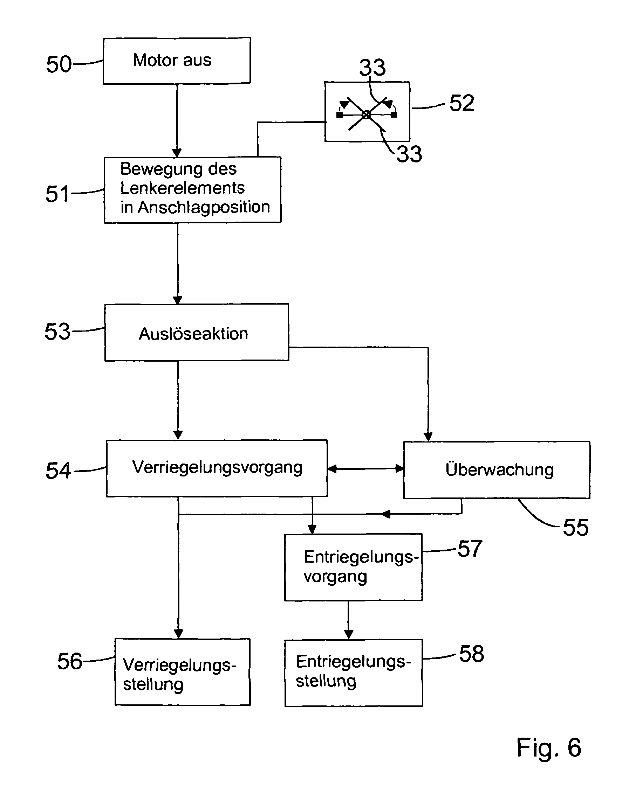

Figur 6 zeigt exemplarisch das erfindungsgemäße Verfahren zur Ansteuerung eines Sperrgliedes 11 der Lenksäule 30 eines Motorrads. Nachdem der Benutzer den Motor über eine bewusste Handlung zunächst gemäß Schritt 50 ausgestellt hat, muss zunächst eine weitere bewusste Bewegung des Lenkerelementes 33 in eine seiner beiden Anschlagpositionen durchgeführt werden, welches im Schritt 51 gezeigt ist. 52 zeigt schematisch, dass das Lenkerelement 33 des Motorrads eine linke und eine rechte Anschlagposition aufweist. Nur wenn das Lenkerelement 33 eine der beiden Anschlagpositionen erreicht, ist eine Verriegelungsstellung 1 gemäß Figur 1 des Sperrgliedes 11 möglich. Nachdem der Benutzer das Lenkerelement 33 in eine der beiden Anschlagpositionen bewegt hat, erfolgt eine weitere bewusste Auslöseaktion 53, mit der der Benutzer bewusst den Verriegelungsvorgang startet, bei dem sich das Sperrglied 11 aus seiner Entriegelungsstellung 2 in die Verriegelungsstellung 1 bewegen lässt. Diese Auslöseaktion 53 kann beispielsweise über einen Schalter 13 am Lenkerelement 33 bewirkt werden. Parallel zur Bewegung des Sperrgliedes 11 in die Verriegelungsstellung 1 wird die Kontrolleinheit 40 aus Figur 1 angesprochen, die eine Überwachung 55 startet, bei der eine mögliche Fehlstellung der Lenksäule 30 überprüft wird. Liegt keine Fehlstellung der Lenksäule 30 vor, gelangt das Sperrglied 11 in die Verriegelungsstellung 56. Liegt hingegen eine Fehlstellung der Lenksäule 30 vor, erfolgt eine Zurückbewegung des Sperrgliedes 11 aus einer möglichen Zwischenstellung in die ursprüngliche Entriegelungsstellung 2.

Selbstverständlich ist es denkbar, dass die Kontrolleinheit 40 die Information erhält, dass der Benutzer im Schritt 50 den Motor durch den Benutzer ausgestellt hat und/oder ob eine der Anschlagpositionen des Lenkerelementes 33 gemäß 51, 52 erreicht sind. Falls eine der Bedingungen gemäß 50, 51, 52 nicht erfüllt sind, kann die Kontrolleinheit 40 die Auslöseaktion 53 blockieren, so dass es trotz bewusster Auslöseaktion des Benutzers zu keinem Verriegelungsvorgang kommt. Das bedeutet, dass das Sperrglied 11 unbeweglich in seiner Entriegelungsstellung 2 verbleibt.

### Bezugszeichenliste

- **1**: Verriegelungsstellung
- **2**: Entriegelungsstellung
- **3**: Zwischenstellung

- **10**: Vorrichtung
- **11**: Sperrglied
- **11.1**: Basisteil
- **11.2**: Wirkteil
- **12**: Gehäuse
- **13**: Schalter, Taster
- **14**: Positionsmarkierung
- **15**: Federelement

- **20**: Antrieb
- **21**: Elektromotor
- **22**: Getriebe
- **30**: Lenksäule, Bauteil
- **31**: Nut, Aufnahme
- **32**: Zahn
- **33**: Lenkerelement

- **40**: Kontrolleinheit
- **41**: Sensorelement
- **41.1**: Hallsensor
- **41.3**: Sender, LED
- **41.4**: Empfänger, Fotodiode
- **41.5**: Sender und Empfänger
- **41.6**: Reflektor
- **42**: Permanentmagnet, Dauermagnet

## Patentansprüche

1. Verfahren zur Ansteuerung eines Sperrgliedes (11) eines funktionswesentlichen Bauteils (30), insbesondere einer Lenksäule (30) eines Kraftfahrzeuges, insbesondere Motorrads, mit einem Antrieb (20), mit dem das Sperrglied (11) in eine Verriegelungsstellung (1) und in eine Entriegelungsstellung (2) und umgekehrt bewegbar ist, wobei
in der Verriegelungsstellung (1) das Sperrglied (11) in das funktionswesentliche Bauteil (30) mechanisch eingreift,
in der Entriegelungsstellung (2) das Sperrglied (11) losgelöst vom funktionswesentlichen Bauteil (30) ist,
über eine definierte Auslöseaktion des Benutzers der Verriegelungsvorgang gestartet wird, bei dem das Sperrglied (11) aus der Entriegelungsstellung (2) in die Verriegelungsstellung (1) bewegt wird, wobei
eine Überwachung durch eine Kontrolleinheit (40) erfolgt, mit der eine mögliche Fehlstellung des Bauteils (30), bei der eine Verriegelungsstellung (1) des Sperrgliedes (11) ausgeschlossen ist, feststellbar ist, **dadurch gekennzeichnet, dass** bei einer Fehlstellung des Bauteils (30) das Sperrglied (11) trotz der Auslöseaktion anschließend die ursprüngliche Entriegelungsstellung (2) einnimmt.

2. Verfahren nach Anspruch 1,
**dadurch gekennzeichnet,**
**dass** die Kontrolleinheit (40) beim Verriegelungsvorgang überprüft, inwieweit das Sperrglied (11) eine definierte Ausfahrposition, in der die Verriegelungsstellung (1) erreicht ist, einnimmt.

3. Verfahren nach Anspruch 2,
**dadurch gekennzeichnet,**
**dass** die Kontrolleinheit (40) über die Auslöseaktion angesteuert und aktiviert wird.

4. Verfahren nach einem der vorhergehenden Ansprüche,
**dadurch gekennzeichnet,**
**dass** nach einer Erkennung einer Fehlstellung des Bauteils (30) das Sperrglied (11) aus einer Zwischenstellung (3), die zwischen der Entriegelungsstellung (2) und der Verriegelungsstellung (1) liegt, in die Entriegelungsstellung (2) zurück verfahren wird.

5. Verfahren nach einem der vorhergehenden Ansprüche,
**dadurch gekennzeichnet,**
**dass** nach einer Erkennung einer Fehlstellung des Bauteils (30) das Sperrglied (11) trotz einer Auslöseaktion des Benutzers in seiner Entriegelungsstellung (2) unbeweglich verbleibt.

6. Verfahren nach einem der vorhergehenden Ansprüche,
**dadurch gekennzeichnet,**
**dass** beim Verriegelungsvorgang die Kontrolleinheit (40) eine Zustandsgröße des Antriebes (20) ermittelt, aus der eine mögliche Fehlstellung des Bauteils (30) feststellbar ist.

7. Verfahren nach einem der vorhergehenden Ansprüche,
**dadurch gekennzeichnet,**
**dass** der Antrieb (20) einen Elektromotor (21) und ein Getriebe (22) aufweist, das in mechanischer Wirkverbindung mit dem Sperrglied (11) ist, wobei insbesondere die Position eines der Getriebeelemente als Zustandgröße ermittelt wird.

8. Verfahren nach Anspruch 7,
**dadurch gekennzeichnet,**
**dass** der Strom des Elektromotors (21) als Zustandsgröße ermittelt wird.

9. Verfahren nach einem der vorhergehenden Ansprüche,
**dadurch gekennzeichnet,**
**dass** die Kontrolleinheit (40) ein Sensorelement (41) aufweist, das insbesondere über eine definierte Änderung seiner elektrischen Eigenschaft, insbesondere der Induktivität, des Widerstandes oder der Kapazität ein Sensorsignal erzeugt wird, aus dem eine mögliche Fehlstellung des Bauteils (30) feststellbar ist.

10. Verfahren nach einem der vorhergehenden Ansprüche,
**dadurch gekennzeichnet,**
**dass** das Sensorelement (41) ein Magnetfeldsensor, ein Drucksensor oder ein optischer Sensor ist.

11. Vorrichtung (10) zur Ansteuerung eines Sperrgliedes (11) eines funktionswesentlichen Bauteils (30), insbesondere einer Lenksäule (30) eines Kraftfahrzeuges, insbesondere Motorrads, mit einem Antrieb (20), mit dem das Sperrglied (11) in eine Verriegelungsstellung (1) und in eine Entriegelungsstellung (2) und umgekehrt bewegbar ist, wobei
in der Verriegelungsstellung (1) das Sperrglied (11) in das funktionswesentliche Bauteil (30) mechanisch eingreift,
in der Entriegelungsstellung (2) das Sperrglied (11) losgelöst vom funktionswesentlichen Bauteil (30) ist,
über eine definierte Auslöseaktion des Benutzers der Verriegelungsvorgang gestartet wird, bei dem das Sperrglied (11) aus der Entriegelungsstellung (2) in die Verriegelungsstellung (1) bewegt wird, wobei
eine Kontrolleinheit (40) vorgesehen ist, mit der eine mögliche Fehlstellung des Bauteils (30), bei der eine Verriegelungsstellung (1) des Sperrgliedes (11) ausgeschlossen ist, feststellbar ist, **dadurch gekennzeichnet, dass** bei einer Fehlstellung das Sperrglied (11) trotz der
Auslöseaktion anschließend die ursprüngliche Entriegelungsposition (2) einnimmt.

12. Vorrichtung nach Anspruch 11,
**dadurch gekennzeichnet,**
**dass** ein Gehäuse (12) vorgesehen ist, innerhalb dessen der Antrieb (20), das Sperrglied (11) sowie die Kontrolleinheit (40) angeordnet sind und/oder dass über eine Betätigung eines vorgesehenen Schalters (13) oder eines Taster (13) die Auslöseaktion bewirkbar ist.

13. Vorrichtung nach einem der vorhergehenden Ansprüche,
**dadurch gekennzeichnet,**
**dass** in der Verriegelungsstellung (1) das Sperrglied (11) mit seinem freien Ende in eine Aufnahme (31) des Bauteils (30) eingreift, wobei insbesondere das Bauteil (30) lediglich zwei Aufnahmen (31) aufweist.

14. Vorrichtung nach einem der vorhergehenden Ansprüche,
**dadurch gekennzeichnet,**
**dass** das Bauteil (30) mit einem Lenkerelement (33) verbunden ist, das in eine linke und in eine rechte Anschlagposition durch den Benutzer bewegbar ist, wobei lediglich in den genannten Anschlagpositionen eine Verriegelungsstellung (1) des Sperrgliedes (11) erreichbar ist.

15. Vorrichtung nach einem der vorhergehenden Ansprüche, die nach einem Verfahren gemäß den Ansprüchen 1 bis 10 betreibbar ist.

## Claims

1. Method to activate a blocking element (11) of an operation-essential component (30), in particular a steering column (30) of a vehicle, particularly a motorbike, comprising an actuator (20), able to move the blocking element (11) in a locking position (1) and in an unlocking position (2) and vice versa, whereby the blocking element (11) is effectively engaging with the operation-essential component (30) in the locking position (1),
the blocking element (11) is uncoupled from the operation-essential component (30) In the unlocking position (2),
using a defined releasing-action of the user the locking-procedure is initiated, moving the locking member (11) from the unlocking position (2) into the locking position (1), whereby
a detection of the control-unit (40) occurs, assessing a possible malposition of the component (30), excluding a locking position (1) of the blocking element (11), **characterized in that**,
during a malposition of the component (30) the blocking element (11) adjacently takes its original unlocking position (2) in spite of a releasing-action.

2. Method according to claim 1,
**characterized in that**,
the control-unit (40) is surveying the locking-procedure, to which extend the blocking element (11) is taking up a defined ascending position In which the locking position (1) is equates.

3. Method according to claim 2,
**characterized in that**,
the control unit (40) is actuated and activated via the releasing-action.

4. Method according to one of the preceding claims,
**characterized in that**,
the blocking element (11) is from an intermediate position (3) driven back Into the unlocking position (2), arranged between the locking position (1) and the unlocking position (2), after the recognition of a malposition of the component (30).

5. Method according to one of the preceding claims,
**characterized in that**,
the blocking element (11) remains Immovable In its unlocking position (2) in spite of a releasing-action of the user, after the recognition of a malposition of the component (30).

6. Method according to one of the preceding claims,
**characterized in that**,
the control-unit (40) is calculating a state variable of the actuator (20) during the locking-procedure, by which a possible malposition of the component (30) Is detectable.

7. Method according to one of the preceding claims,
**characterized in that**,
the actuator (20) is comprising an electric motor (21) and a gear (22), effectively connected with the blocking element (11), whereby in particular the position of a gear element is determined as a state variable.

8. Method according to claim 7,
**characterized in that**,
the current of the electric motor (21) is determined as a state variable.

9. Method according to one of the preceding claims,
**characterized in that**,
the control unit (40) is comprising a sensor element (41), that particularly via a defined modification of its electric property, particularly of the inductance, of the resistance or of the capacity a sensor-signal is induced, possibly detecting a malposition of the component (30).

10. Method according to one of the preceding claims,
**characterized In that**,
the sensor element (41) is a magnetic field sensor, a pressure sensor or an optical sensor.

11. Device (10) to activate a blocking element (11) of an operation-essential component (30), in particular a steering column (30) of a vehicle, particularly a motorbike, comprising an actuator (20), able to move the blocking element (11) in a locking position (1) and in an unlocking position (2) and vice versa, whereby the blocking element (11) is effectively engaging with the operation-essential component (30) in the locking position (1),
the blocking element (11) is uncoupled from the operation-essential component (30) in the unlocking position (2),
using a defined releasing-action of the user the locking-procedure is initiated, moving the locking member (11) from the unlocking position (2) into the locking position (1), whereby
a detection of the control-unit (40) occurs, assessing a possible malposition of the component (30), excluding a locking position (1) of the blocking element (11), **characterized in that**,
during a malposition of the component (30) the blocking element (11) adjacently takes its original unlocking position (2) in spite of a releasing-action.

12. Device (10) according to claim 11,
**characterized in that**,
a housing (12) is provided in which the actuator (20), the blocking element (11) and the control unit (40) are assembled and/or via an activation of a provided switch (13) or a key-button (13) the releasing-action Is operatable.

13. Device (10) according to one of the preceding claims,
**characterized in that**,
in the locking position (1) the blocking element (11) Is engaging into the support (31) of the component (30) with Its loose edge, whereby particularly the component (30) comprises solely two supports (31).

14. Device (10) according to one of the preceding claims,
**characterized in that**,
the component (30) is connected to a guide element (30) which is movable into a left and a right dead stop position through the user, whereby only in the mentioned dead stop position, a locking position (1) of the blocking element (11), is achievable.

15. Device (10) according to one of the preceding claims, operatable using a method according to claims 1 to 10.

## Revendications

1. Procédé d'activation d'un organe de blocage (11) d'une pièce structurelle (30) fonctionnellement essentielle, en particulier d'une colonne de direction (30) d'un véhicule automobile et notamment d'une motocyclette, comprenant un entraînement (20) par lequel l'organe de blocage (11) peut être mû jusqu'à une position de verrouillage (1) et jusqu'à une position de déverrouillage (2), et inversement, sachant que, dans la position de verrouillage (1), l'organe de blocage (11) pénètre mécaniquement dans la pièce structurelle (30) fonctionnellement essentielle,
que, dans la position de déverrouillage (2), ledit organe de blocage (11) est dissocié d'avec ladite pièce structurelle (30) fonctionnellement essentielle,
que le processus de verrouillage, au cours duquel ledit organe de blocage (11) est mû de la position de déverrouillage (2) à la position de verrouillage (1), est amorcé par une manoeuvre de déclenchement bien définie exercée par l'utilisateur,
une surveillance étant exécutée par une unité de contrôle (40) permettant de constater une position erronée potentielle de la pièce structurelle (30) qui exclut une position de verrouillage (1) de l'organe de blocage (11), **caractérisé par le fait que** l'organe de blocage (11) prend la position initiale de déverrouillage (2) dans l'enchaînement, en présence d'une position erronée de la pièce structurelle (30), malgré la manoeuvre de déclenchement.

2. Procédé selon la revendication 1,
**caractérisé par le fait**
**que** l'unité de contrôle (40) vérifie, au cours du processus de verrouillage, l'ampleur suivant laquelle l'organe de blocage (11) prend un emplacement de départ bien défini auquel la position de verrouillage (1) est atteinte.

3. Procédé selon la revendication 2,
**caractérisé par le fait**
**que** l'unité de contrôle (40) est activée et mise en action par le biais de la manoeuvre de déclenchement.

4. Procédé selon l'une des revendications précédentes,
**caractérisé par le fait**
**qu'**à l'issue d'un repérage d'une position erronée de la pièce structurelle (30), l'organe de blocage (11) est ramené à la position de déverrouillage (2) à partir d'une position Intermédiaire (3) située entre ladite position de déverrouillage (2) et la position de verrouillage (1).

5. Procédé selon l'une des revendications précédentes,
**caractérisé par le fait**
**qu'**à l'issue d'un repérage d'une position erronée de la pièce structurelle (30), l'organe de blocage (11) demeure immobile dans sa position de déverrouillage (2), malgré une manoeuvre de déclenchement de l'utilisateur.

6. Procédé selon l'une des revendications précédentes,
**caractérisé par le fait**
**que**, lors du processus de verrouillage, l'unité de contrôle (40) détermine une grandeur d'état de l'entraînement (20) sur la base de laquelle il est possible de constater une position erronée potentielle de la pièce structurelle (30).

7. Procédé selon l'une des revendications précédentes,
**caractérisé par le fait**
**que** l'entraînement (20) comporte un moteur électrique (21) et une transmission (22) en liaison mécanique opérante avec l'organe de blocage (11), l'emplacement de l'un des éléments de la transmission étant notamment déterminé en tant que grandeur d'état.

8. Procédé selon la revendication 7,
**caractérisé par le fait**
**que** le courant du moteur électrique (21) est déterminé en tant que grandeur d'état.

9. Procédé selon l'une des revendications précédentes,
**caractérisé par le fait**
**que** l'unité de contrôle (40) présente un élément détecteur (41) qui génère, notamment par le biais d'une modification bien définie de sa propriété électrique, en particulier de l'inductance, de la résistance ou de la capacité, un signal de détection sur la base duquel il est possible de constater une position erronée potentielle de la pièce structurelle (30).

10. Procédé selon l'une des revendications précédentes,
**caractérisé par le fait**
**que** l'élément détecteur (41) est un détecteur de champs magnétiques, un détecteur de pressions ou un détecteur optique.

11. Dispositif (10) d'activation d'un organe de blocage (11) d'une pièce structurelle (30) fonctionnellement essentielle, en particulier d'une colonne de direction (30) d'un véhicule automobile et notamment d'une motocyclette, comprenant un entraînement (20) par lequel l'organe de blocage (11) peut être mû jusqu'à une position de verrouillage (1) et jusqu'à une position de déverrouillage (2), et inversement, sachant que, dans la position de verrouillage (1), l'organe de blocage (11) pénètre mécaniquement dans la pièce structurelle (30) fonctionnellement essentielle,
que, dans la position de déverrouillage (2), ledit organe de blocage (11) est dissocié d'avec ladite pièce structurelle (30) fonctionnellement essentielle,
que le processus de verrouillage, au cours duquel ledit organe de blocage (11) est mû de la position de déverrouillage (2) à la position de verrouillage (1), est amorcé par une manoeuvre de déclenchement bien définie exercée par l'utilisateur,
qu'il est prévu une unité de contrôle (40) permettant de constater une position erronée potentielle de la pièce structurelle (30) qui exclut une position de verrouillage (1) de l'organe de blocage (11), **caractérisé par le fait que** l'organe de blocage (11) prend la position initiale de déverrouillage (2) dans l'enchaînement, en présence d'une position erronée, malgré la manoeuvre de déclenchement.

12. Dispositif selon la revendication 11,
**caractérisé par le fait**
**qu'**il est prévu un carter (12) à l'intérieur duquel l'entraînement (20), l'organe de blocage (11), ainsi que l'unité de contrôle (40) sont logés ; et/ou par le fait que la manoeuvre de déclenchement peut être provoquée par actionnement d'un interrupteur prévu (13), ou d'un palpeur (13).

13. Dispositif selon l'une des revendications précédentes,
**caractérisé par le fait**
**que** l'organe de blocage (11) pénètre dans un logement (31) de la pièce structurelle (30) par son extrémité libre, dans la position de verrouillage (1), ladite pièce structurelle (30) étant, en particulier, pourvue uniquement de deux logements (31).

14. Dispositif selon l'une des revendications précédentes,
**caractérisé par le fait**
**que** la pièce structurelle (30) est reliée à un élément de guidon (33) pouvant être m0, par l'utilisateur, jusqu'à des emplacements de venue en butée respectivement situés à gauche et à droite, une position de verrouillage (1) de l'organe de blocage (11) pouvant être atteinte uniquement auxdits emplacements de venue en butée.

15. Dispositif selon l'une des revendications précédentes, pouvant être actionné selon un procédé conforme aux revendications 1 à 10.
